# FASCICULE DE BREVET EUROPEEN

(11) **EP 2 058 802 B1**
(45) Date de publication et mention de la délivrance du brevet: **22.12.2010**
(21) Numéro de dépôt: 08167545.6
(22) Date de dépôt: 24.10.2008
(51) Int. Cl.: G10L 17/00, G10L 15/22

(54) **Dispositif et procédé d'obtention de contextes d'utilisateurs de terminaux de communication, à partir de signaux audio captés dans leur environnement**
Vorrichtung und Verfahren zur Kontexterfassung von Nutzern von Kommunikationsendgeräten mit Hilfe von in ihrer Umgebung aufgefangenen Audiosignalen
Device and method for obtaining the contexts of users of communication terminals, based on audio signals captured in their environment

(30) Priorité: 06.11.2007 FR 0758821
(43) Date de publication de la demande: 13.05.2009
(73) Titulaire: Alcatel Lucent, 75008 Paris (FR)
(72) Inventeur: Toms, Yann, 91620 Nozay (FR); Senot, Christophe, 91620 Nozay (FR); Aghasaryan, Armen, 91620 Nozay (FR); Betge-Brezetz, Stéphane, 91620 Nozay (FR)
(74) Mandataire: Hedarchet, Stéphane

(56) Documents cités:
- EP-A- 1 076 329
- EP-A- 1 267 590
- EP-A- 1 646 037
- US-B1- 6 721 706

## Description

L'invention concerne les réseaux de communication et plus précisément la détermination des contextes des utilisateurs de terminaux de communication qui sont connectés à de tels réseaux de communication.

On entend ici par « contexte d'utilisateur » un ensemble de données d'information qui décrivent l'environnement et/ou la situation d'un utilisateur à un instant donné. Tout type d'environnement est ici concerné, et notamment l'environnement social (également appelé relationnel), comme par exemple le fait d'être seul, en groupe, en famille, avec son conjoint, avec ses enfants ou au milieu d'une foule. De même, tout type de situation est ici concerné, et notamment la localisation (par exemple dans un métro, un avion, un bus ou une voiture, ou au bord de la mer ou d'un lac ou d'un cours d'eau, ou à la campagne ou dans une foret), l'état émotionnel (par exemple calme, rieur, silencieux, en train de parler ou de crier ou de pleurer) et l'activité (par exemple assis, en train de faire du sport ou de marcher).

Par ailleurs, on entend ici par « réseau de communication » tout type d'infrastructure de communication, filaire ou non filaire, à laquelle peuvent se connecter des terminaux de communication. Par conséquent, il pourra s'agir d'un réseau filaire, par exemple de type xDSL ou à fibre ou encore à câble, ou d'un réseau sans fil, éventuellement satellitaire et/ou éventuellement de diffusion, par exemple de type cellulaire (ou mobile) (comme par exemple un réseau de type GSM, GPRS/EDGE, UMTS, CDMA (2000) ou HSDPA), ou de type WLAN (« Wireless Local Area Network - réseau local sans fil, comme par exemple un réseau WiMAX ou Wi-Fi).

Enfin, on entend ici par « terminal de communication » tout équipement de communication fixe ou mobile (ou portable ou encore cellulaire) capable de se connecter à un réseau de communication, au moins pour lui transmettre des données. Par conséquent, il pourra par exemple s'agir d'un téléphone fixe ou mobile (ou cellulaire), éventuellement de type téléphone d'entreprise connecté à un commutateur téléphonique privé (ou PBX), d'un ordinateur fixe ou portable, d'un assistant personnel numérique (ou PDA) ou d'un récepteur de contenus multimédia (par exemple un décodeur ou une STB (« Set-Top Box »)), dès lors qu'il est équipé de moyens de communication, éventuellement radio ou satellitaires.

En raison du nombre toujours croissant de contenus multimédia et de services de tous types qui sont mis à la disposition des utilisateurs de terminaux (de communication), il devient de plus en plus utile de proposer auxdits utilisateurs une sélection automatique de certains contenus ou services en fonction de leurs profils d'utilisateurs respectifs.

Il est rappelé qu'un profil d'utilisateur est habituellement composé de données démographiques relatives à cet utilisateur (c'est-à-dire son sexe, son âge et son lieu d'habitation ou de travail), et/ou des préférences et/ou centres d'intérêt de cet utilisateur (type de contenu préféré, genre de contenu préféré, intérêts en général, passe-temps favoris (« hobbies »)), et/ou des habitudes d'utilisation de cet utilisateur.

Malgré l'existence de tels profils d'utilisateurs, il arrive fréquemment que des contenus sélectionnés ou des services proposés ne correspondent pas exactement aux besoins ou envies de certains utilisateurs à l'instant où ils leurs sont proposés. Cela résulte notamment du manque de précision d'un profil d'utilisateur, mais également du fait que l'on ne connaît que très partiellement, voire pas du tout, le contexte de l'utilisateur au moment où on souhaite lui proposer une sélection de contenus ou bien un service particulier. A titre d'exemple non limitatif, un appel téléphonique va déclencher la sonnerie du terminal mobile d'un utilisateur si ce dernier ne l'a pas désactivée. Or, si cet utilisateur assiste à un spectacle public, la sonnerie va déranger de nombreuses personnes. De même, il est inutile de proposer des contenus ou services relatifs à un centre d'intérêt ou une habitude d'un utilisateur si ce dernier est en train de dormir ou de conduire un véhicule, et que son terminal mobile est en veille.

Afin d'éviter certaines sélections inadaptées de contenus ou de services, il a été proposé de tenir compte de la position du terminal de l'utilisateur lors de la sélection. Mais, cela n'est fréquemment que partiellement utile, voire même inutile, du fait que le contexte de localisation ne constitue qu'une partie du contexte global de l'utilisateur. En outre, il arrive fréquemment que l'on ne puisse pas estimer la position géographique d'un utilisateur, par exemple du fait qu'il est à l'intérieur d'un bâtiment ou du fait qu'il est à l'extérieur de bâtiments mais que les conditions de réception sont mauvaises.

L'invention a donc pour but d'améliorer la situation, et notamment de permettre l'obtention du contexte d'un utilisateur, compte tenu de son environnement et/ou de sa situation à un instant donné les documents US 6 721 706, EP 1 076 329 et EP 1 267 590 visent à résoudre le même problème et proposent d'autres solutions alternatives.

L'invention propose à cet effet un dispositif, dédié à l'obtention de contexte(s) relatif(s) à au moins un utilisateur de terminal (de communication) équipé d'un microphone et connecté à un réseau de communication, et comprenant des moyens d'analyse chargés, en cas de réception de signaux audio captés par le microphone d'un terminal dans l'environnement de ce dernier :
- de comparer les signaux audio reçus à des séquences de signaux audio enregistrées et associées à des contextes élémentaires prédéfinis, et
- en cas de correspondance entre ces signaux audio reçus et l'une au moins des séquences, de délivrer un message élémentaire désignant chaque contexte élémentaire associé à chaque séquence correspondant aux signaux audio reçus ainsi que l'utilisateur du terminal dont le microphone a capté ces derniers.

Il comprend aussi des moyens d'identification chargés, en présence d'un message élémentaire désignant au moins deux contextes élémentaires relatifs à un même utilisateur, de déterminer (déduire) un contexte affiné représentant ces contextes élémentaires désignés à partir d'un modèle de contextes affinés prédéfini, puis de délivrer un message affiné désignant ce contexte affiné déterminé ainsi que l'utilisateur associé.

Le dispositif selon l'invention peut comporter d'autres caractéristiques qui peuvent être prises séparément ou en combinaison, et notamment :
- il peut comprendre des premiers moyens de stockage propres à stocker les séquences de signaux audio enregistrées en correspondance d'identifiants de séquence ;
- il peut comprendre des seconds moyens de stockage propres à stocker, d'une part, des définitions des contextes élémentaires prédéfinis en correspondance d'identifiants de séquence de signaux audio enregistrée, et d'autre part, chaque définition de contexte affiné ;
- ses moyens d'analyse peuvent être chargés de transformer des signaux audio captés en une nouvelle séquence de signaux audio enregistrée.
- ses moyens d'analyse peuvent être chargés, en cas de réception de signaux audio captés par le microphone d'un terminal de type radio situé dans une zone identifiée d'un réseau de communication radio, d'initier le téléchargement de séquences de signaux audio enregistrées correspondant à cette zone identifiée, puis de comparer les signaux audio reçus au moins à ces séquences téléchargées ;
- il peut comprendre des moyens de gestion chargés, de stocker dans les premiers moyens de stockage une nouvelle séquence de signaux audio enregistrée, transmise par l'opérateur du réseau, en correspondance d'un nouvel identifiant de séquence, puis de stocker dans les seconds moyens de stockage une nouvelle définition de contexte élémentaire en correspondance du nouvel identifiant de séquence, et/ou d'associer un identifiant de séquence à une nouvelle séquence résultant de signaux audio captés, puis d'associer une nouvelle instance de contexte élémentaire à cet identifiant de séquence, puis de stocker dans les premiers moyens de stockage cette nouvelle séquence en correspondance de son identifiant de séquence, et de stocker dans les seconds moyens de stockage la nouvelle instance de contexte élémentaire en correspondance de l'identifiant de séquence associé :
- les contextes élémentaires peuvent par exemple être choisis parmi (au moins) les contextes environnementaux et les contextes de situation ;
   ➢ les contextes environnementaux sont choisis dans un groupe comprenant au moins les contextes sociaux/relationnels et les contextes (d'intensités) sonores (c'est-à-dire relatifs à l'intensité du bruit ambiant) ;
   ➢ les contextes de situation peuvent par exemple être choisis parmi (au moins) les contextes de localisation, les contextes d'état émotionnel et les contextes d'activité.

L'invention propose également un terminal de communication comprenant un dispositif d'obtention de contexte(s) du type de celui présenté ci-avant.

L'invention propose également un serveur de service, pour un réseau de communication, comprenant un dispositif d'obtention de contexte(s) du type de celui présenté ci-avant, et propre à recevoir, des terminaux de communication qui sont connectés au réseau, des signaux audio captés dans leur propre environnement par un microphone qu'ils comprennent.

Ce serveur peut éventuellement comprendre des moyens de profilage chargés de définir des profils d'utilisateurs en fonction de contextes élémentaires et/ou de contextes affinés relatifs aux utilisateurs, délivrés par son dispositif d'obtention de contexte(s).

L'invention propose également un procédé dédié à l'obtention de contexte(s) relatif(s) à au moins un utilisateur de terminal de communication équipé d'un microphone et connecté à un réseau de communication, et consistant :
- à capter des signaux audio dans l'environnement d'un terminal, au moyen d'un microphone,
- à comparer les signaux audio captés à des séquences de signaux audio enregistrées et associées à des contextes élémentaires prédéfinis, et
- en cas de correspondance entre les signaux audio reçus et l'une au moins des séquences, à délivrer un message élémentaire désignant chaque contexte élémentaire associé à chaque séquence correspondant aux signaux audio captés ainsi que l'utilisateur du terminal dont le microphone a capté ces derniers.

En présence d'un message élémentaire désignant au moins deux contextes élémentaires relatifs à un même utilisateur, on détermine (déduit) un contexte affiné représentant ces contextes élémentaires désignés à partir d'un modèle de contextes affinés prédéfini, puis on délivre un message affiné désignant ce contexte affiné déterminé ainsi que l'utilisateur associé.

Le procédé selon l'invention peut comporter d'autres caractéristiques qui peuvent être prises séparément ou en combinaison, et notamment :
- on peut transformer des signaux audio captés choisis en une nouvelle séquence de signaux audio enregistrée ;
   ➢ on peut associer un nouvel identifiant de séquence à chaque nouvelle séquence résultant de signaux audio captés, puis on peut associer une nouvelle instance de contexte élémentaire à ce nouvel identifiant de séquence, puis on peut stocker cette nouvelle séquence en correspondance de son identifiant de séquence, et on peut stocker cette nouvelle instance de contexte élémentaire en correspondance de l'identifiant de séquence associé ;
- en cas de réception de signaux audio captés par le microphone d'un terminal de type radio situé dans une zone identifiée d'un réseau de communication radio, on peut télécharger des séquences de signaux audio enregistrées correspondant à cette zone identifiée, puis on peut comparer les signaux audio reçus au moins aux séquences téléchargées ;
- on peut définir des profils d'utilisateurs en fonction de contextes élémentaires et/ou de contextes affinés relatifs aux utilisateurs.

D'autres caractéristiques et avantages de l'invention apparaîtront à l'examen de la description détaillée ci-après, et des dessins annexés, sur lesquels :
- la figure 1 illustre de façon très schématique et fonctionnelle un terminal de communication mobile équipé d'un exemple de réalisation d'un dispositif d'obtention de contexte(s) d'utilisateur(s) selon l'invention et couplé à un réseau de communication,
- la figure 2 illustre de façon très schématique et fonctionnelle un serveur de service équipé d'un exemple de réalisation d'un dispositif d'obtention de contexte(s) d'utilisateur(s) selon l'invention et couplé à un réseau de communication.

Les dessins annexés pourront non seulement servir à compléter l'invention, mais aussi contribuer à sa définition, le cas échéant.

L'invention a pour objet de permettre l'obtention des contextes d'utilisateurs disposant de terminaux de communication propres à se connecter à au moins un réseau de communication, compte tenu de leurs environnements et/ou de leurs situations à un instant donné.

Dans ce qui suit, on considère à titre d'exemple illustratif et non limitatif que le réseau de communication (RC) est un réseau mobile (ou cellulaire), par exemple de type GSM, GPRS/EDGE, UMTS, CDMA (2000) ou HSDPA. Mais, l'invention n'est pas limitée à ce type de réseau de communication. Elle concerne en effet tout type d'infrastructure de communication, filaire ou non filaire, à laquelle peuvent se connecter des terminaux de communication. Par conséquent, il pourra également s'agir d'un réseau filaire, par exemple de type xDSL ou à fibre ou encore à câble, ou d'un réseau sans fil de type WLAN.

Par ailleurs, on considère dans ce qui suit, à titre d'exemple illustratif et non limitatif, que les terminaux de communication (T, T) sont des téléphones mobiles (ou cellulaires). Mais, l'invention n'est pas limitée à ce type de terminal de communication. Elle concerne en effet tout équipement de communication fixe ou mobile (ou portable ou encore cellulaire) capable de se connecter à un réseau de communication (RC) d'un type défini ci-avant, au moins pour lui transmettre des données. Par conséquent, il pourra également s'agir d'un téléphone fixe ou sans fil, éventuellement de type téléphone d'entreprise connecté à un commutateur téléphonique privé (ou PBX), d'un ordinateur fixe ou portable, d'un assistant personnel numérique (ou PDA) ou d'un récepteur de contenus multimédia (par exemple un décodeur ou une STB (« Set-Top Box »)), dès lors qu'il est équipé de moyens de communication, éventuellement radio ou satellitaires.

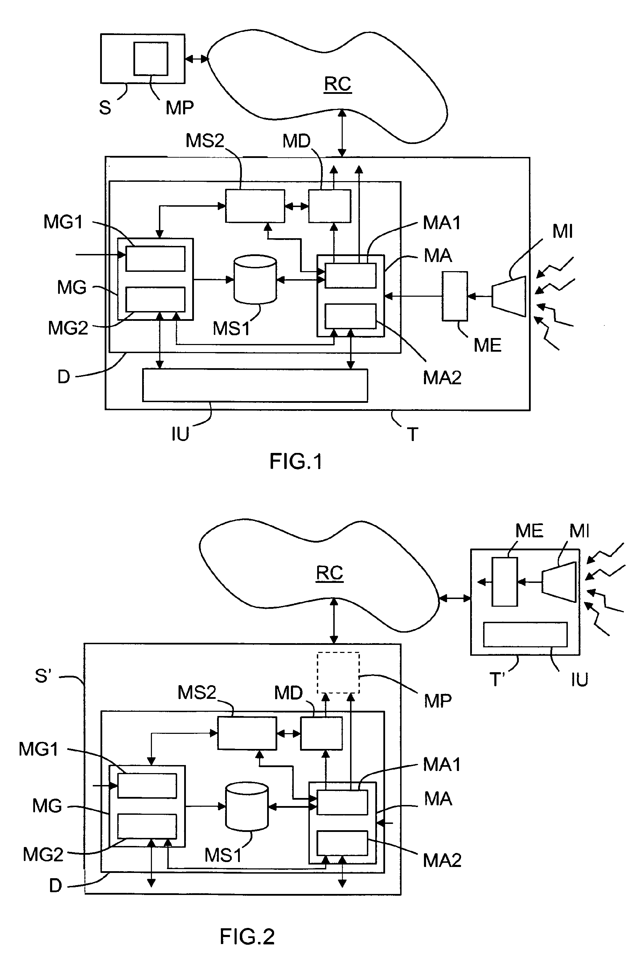

Afin de permettre l'obtention du contexte en cours (ou à un instant donné) d'au moins un utilisateur d'un terminal de communication (ici un téléphone mobile (T ou T)), l'invention propose un dispositif D du type de celui qui est illustré sur les figures 1 et 2. Un tel dispositif D peut être soit implanté dans (ou couplé à) un terminal (de communication) T, comme illustré sur la figure 1, soit implanté dans (ou couplé à) un serveur de service S', comme illustré sur la figure 2.

On comprendra que dans le cas de la figure 1, le dispositif D est chargé d'obtenir le contexte en cours de l'utilisateur de son seul terminal T (solution dite distribuée), tandis que dans le cas de la figure 2, le dispositif D est chargé d'obtenir les contextes en cours des utilisateurs de nombreux terminaux T' (solution dite centralisée).

Un dispositif D selon l'invention (quelle que soit son implantation) comprend au moins un module d'analyse MA chargé d'intervenir chaque fois qu'il reçoit d'un terminal T ou T' des signaux audio qui ont été captés dans son environnement par un microphone MI qu'il comprend (ou auquel il est couplé), puis enregistré, généralement de façon numérique, par un module d'enregistrement ME qu'il comprend également (ou auquel il est couplé).

On comprendra que lorsque le dispositif D est implanté dans un terminal T, comme illustré sur la figure 1, les signaux audio captés (c'est-à-dire enregistrés dans son environnement) lui sont communiqués en interne, tandis que lorsque le dispositif D est implanté dans un serveur de service S', comme illustré sur la figure 2, les signaux audio captés (c'est-à-dire enregistrés dans l'environnement d'un terminal T') lui sont communiqués par ce dernier (T') via le réseau de communication RC.

Lorsque le module d'analyse MA dispose de signaux audio captés, il les compare à des séquences de signaux audio qui ont été précédemment enregistrées et associées à des contextes élémentaires prédéfinis.

Par exemple, le dispositif D comprend des premiers moyens de stockage MS1 dans lesquels il stocke des séquences de signaux audio enregistrées en correspondance d'identifiants de séquence. Ces premiers moyens de stockage MS1 peuvent être de tout type connu de l'homme de l'art. Par conséquent, il pourra par exemple s'agir d'une mémoire (notamment dans le cas distribué) ou d'une base de données (notamment dans le cas centralisé).

Certaines au moins des séquences de signaux audio enregistrées peuvent par exemple être fournies par l'opérateur du réseau de communication RC. Mais, comme on le verra plus loin, certaines au moins des séquences de signaux audio enregistrées peuvent par exemple être définies à partir de signaux audio captés par le microphone MI d'un terminal T ou T'.

Par ailleurs, on peut également envisager que certaines au moins des séquences de signaux audio enregistrées qui sont utilisées par le module d'analyse MA pour effectuer une comparaison soient téléchargées par le dispositif D à la demande dudit module d'analyse MA en fonction de la zone identifiée du réseau de communication RC dans laquelle le terminal T ou T'est situé (éventuellement momentanément). Dans le cas d'un réseau RC de type mobile (ou cellulaire), la zone identifiée peut être une cellule ou un secteur de la zone de couverture radio. Le module d'analyse MA dispose ainsi de séquences enregistrées prédéfinies qui décrivent avec précision l'environnement sonore type de la zone dans laquelle est situé un terminal T ou T'.

Une séquence de signaux audio enregistrée constitue en quelque sorte la signature sonore (audio) qui caractérise un contexte élémentaire qui décrit une partie au moins de l'environnement et/ou de la situation d'un utilisateur.

Tout type d'environnement est ici concerné, et notamment l'environnement social (ou relationnel) et l'environnement sonore (c'est-à-dire relatif à l'intensité du bruit ambiant), comme par exemple le fait d'être seul, en groupe, en famille, avec son conjoint, avec ses enfants ou au milieu d'une foule, ou le fait qu'il y ait du bruit, voire beaucoup de bruit, ou qu'il n'y ait pas du tout (ou quasiment pas) de bruit. De même, tout type de situation est ici concerné, et notamment la localisation (par exemple dans un métro, un avion, un bus ou une voiture, ou au bord de la mer ou d'un lac ou d'un cours d'eau, ou à la campagne ou dans une foret), l'état émotionnel (par exemple calme, rieur, silencieux, en train de parler ou de crier ou de pleurer) et l'activité (par exemple assis, en train de faire du sport ou de marcher).

On comprendra qu'il est possible d'associer à chacun des contextes élémentaires précités une séquence audio qui le caractérise.

Comme illustré de façon non limitative sur les figures 1 et 2, le dispositif D peut comprendre des seconds moyens de stockage MS2 dans lesquels il stocke au moins des définitions de contextes élémentaires prédéfinis en correspondance d'identifiants de séquence de signaux audio enregistrée.

Lorsque le module d'analyse MA a fini une comparaison par analyse spectrale, il dispose d'informations qui représentent le niveau de correspondance (ou « matching ») entre les signaux audio captés (objets de la comparaison) et chacune des séquences de signaux audio qu'il a utilisé. Il peut alors retenir l'identifiant de chaque séquence qu'il estime correspondre aux signaux audio captés compte tenu de son niveau de correspondance.

Si le module d'analyse MA a déterminé au moins une séquence qui correspond aux signaux audio captés, il détermine l'identifiant de cette séquence (par exemple dans les premiers moyens de stockage MS1) puis l'identifiant du contexte élémentaire qui est associé à cette séquence (par exemple dans les seconds moyens de stockage MS2). Il délivre ensuite un message élémentaire qui désigne chaque contexte élémentaire associé à chaque séquence déterminée (qui correspond aux signaux audio captés) ainsi que l'utilisateur du terminal T ou T' dont le microphone MI a capté ces signaux audio.

On entend ici par « désigner » le fait de représenter un contexte élémentaire et un utilisateur par exemple au moyen d'un identifiant de contexte élémentaire et d'un identifiant d'utilisateur (ou de terminal T ou T').

Chaque message élémentaire délivré par le module d'analyse MA peut être soit utilisé par une application locale ou distante (contrôlée par un serveur S distant), et dans ce cas il est communiqué à ladite application, éventuellement via le réseau de communication RC, soit utilisé localement par le dispositif D, par exemple à la demande d'une application locale ou distante (contrôlée par un serveur S distant). Dans cette dernière hypothèse, le dispositif D comprend un module d'identification MD qui est chargé, lorsqu'il reçoit un message élémentaire, délivré par le module d'analyse MA et désignant au moins deux contextes élémentaires relatifs à un même utilisateur, de déterminer (par exemple déduire) un contexte affiné qui représente ces contextes élémentaires désignés à partir d'au moins un modèle de contextes affinés prédéfini.

On entend ici par « contexte affiné » un contexte qui décrit globalement l'environnement et/ou la situation d'un utilisateur.

Tout type de modèle connu de l'homme de l'art peut être utilisé par le module d'identification MD pour déterminer un contexte affiné, et notamment un modèle de type dit « à réseau Bayésien » ou « à arbre de décision » ou encore « ontologie à règles d'inférence ».

A titre d'exemple illustratif et non limitatif, si le module d'analyse MA a déterminé deux contextes élémentaires, tels que « avec son conjoint » et « avec ses enfants », qui correspondent à des signaux audio captés, alors le module d'identification MD déduit de ces deux contextes élémentaires et d'un modèle de contextes affinés que l'utilisateur concerné est en famille. Ce contexte « en famille » constitue alors un contexte affiné.

Chaque définition de modèle de contextes affinés, utile au module d'identification MD, peut par exemple être stockée dans les seconds moyens de stockage MS2.

Une fois que le module d'identification MD a déterminé un contexte affiné à partir du contenu d'un message élémentaire, il génère (et délivre sur une sortie) un message affiné qui désigne ce contexte affiné ainsi que l'utilisateur concerné.

On entend ici par « désigner » le fait de représenter un contexte affiné et un utilisateur par exemple au moyen d'un identifiant de contexte affiné et d'un identifiant d'utilisateur (ou de terminal T ou T')

Chaque message affiné délivré par le module d'analyse MA peut être utilisé par une application locale ou distante (contrôlée par un serveur S distant), et dans ce cas il est communiqué à ladite application, éventuellement via le réseau de communication RC.

Que le message délivré par un dispositif D soit affiné ou élémentaire, son contenu (contexte(s) élémentaire(s) ou contexte affiné relatif(s) à un utilisateur) peut être utilisé pour effectuer ce que l'homme de l'art appelle un « profilage ». Le profilage consiste à définir ou compléter ou encore affiner un profil d'utilisateur en fonction de traces de consommation (ou d'utilisation) de contenus ou de services. Des contextes affinés ou élémentaires obtenus à différents instants pour un même utilisateur constituent de telles traces. Certaines données de profil peuvent ainsi être contextualisées, par exemple pour définir un centre d'intérêt d'un utilisateur en fonction d'un contexte donné. Ce profilage peut par exemple être réalisé par un module de profilage MP qui fait partie d'un serveur de service S distant ou bien (dans l'exemple de la figure 2) du serveur de service S' qui contient le dispositif D.

Comme évoqué précédemment, le module d'analyse MA du dispositif D peut être éventuellement agencé de manière à transformer des signaux audio captés (qu'il reçoit de son terminal T ou d'un terminal distant T') en une nouvelle séquence de signaux audio enregistrée. Dans ce cas, et comme illustré sur les figures 1 et 2, le module d'analyse MA peut par exemple comporter deux sous-modules MA1 et MA2, l'un MA1 étant dédié à la détermination des contextes élémentaires décrite précédemment, et l'autre MA2 étant dédié à la génération de nouvelles séquences de signaux audio enregistrées.

Le second sous-module d'analyse MA2 peut par exemple dialoguer avec un utilisateur via une interface graphique de type GUI (« Graphical User Interface ») IU, notamment pour enregistrer une nouvelle séquence à sa demande puis pour initier sa sauvegarde dans les premiers moyens de stockage MS1, ou pour demander à l'utilisateur de recommencer une capture de signaux audio au moyen du microphone MI (et du module d'enregistrement ME) de son terminal T ou T', lorsqu'il estime que la qualité des signaux audio précédemment captés n'est pas suffisante.

Comme illustré, cette interface graphique de type GUI IU fait de préférence partie du terminal T ou T' qu'utilise un utilisateur pour dialoguer avec le dispositif D, et notamment pour lui adresser ses instructions et commandes.

Grâce à ce second sous-module d'analyse MA2, un utilisateur peut définir ses propres séquences, par exemple pour bien définir certains de ses environnements habituels et certaines de ses situations personnelles habituelles. Ainsi, il pourra par exemple enregistrer des séquences relatives à son conjoint, ses enfants, ses amis, son chien, son lieu de travail, son lieu de vacance, et analogues.

Egalement comme illustré, le dispositif D peut éventuellement comprendre un module de gestion MG assurant l'interface avec ses premiers MS1 et seconds MS2 moyens de stockage, au moins pour ce qui concerne le stockage des séquences, des identifiants de séquence, des définitions de contextes élémentaires et des identifiants de séquence et identifiants de contexte associés, et des définitions des modèles de contextes affinés.

Comme illustré sur les figures 1 et 2, le module de gestion MG peut par exemple comporter deux sous-modules MG1 et MG2, l'un MG1 étant dédié à l'interface avec l'opérateur du réseau de communication RC, et l'autre MG2 étant dédié à l'interface avec le ou les utilisateurs.

Dans ce mode de réalisation, le premier sous-module de gestion MG1 peut par exemple être chargé de stocker dans les premiers moyens de stockage MS1 chaque nouvelle séquence de signaux audio enregistrée, qui est transmise à son dispositif D, via le réseau de communication RC, par l'opérateur de ce réseau RC, en correspondance d'un nouvel identifiant de séquence. Il peut être également chargé de stocker dans les seconds moyens de stockage MS2 chaque nouvelle définition de contexte élémentaire en correspondance d'un nouvel identifiant de séquence qui a été associé à une nouvelle séquence de signaux audio enregistrée qui vient (ou qui est sur le point) d'être stockée dans les premiers moyens de stockage MS1. Il peut être également chargé d'effectuer des mises à jour dans les premiers MS1 et/ou seconds MS2 moyens de stockage.

Le second sous-module de gestion MG2 peut par exemple être chargé de dialoguer avec un (des) utilisateur(s) via l'interface graphique de type GUI IU de son (de leur) terminal T (ou T'), ainsi qu'avec le second sous-module d'analyse MA2 de son dispositif D.

Ce dialogue est notamment destiné :
- à associer un identifiant de séquence à une nouvelle séquence de signaux audio qui vient d'être enregistrée par le second sous-module d'analyse MA2 et que l'utilisateur concerné souhaite stocker,
- à permettre à cet utilisateur d'associer une nouvelle instance de contexte élémentaire à cet identifiant de séquence (par exemple, on peut créer des instances contexte_Pierre et contexte_Jean pour le contexte élémentaire « Ami »). La sélection d'un contexte élémentaire en vue de lui attribuer une nouvelle instance peut se faire dans une liste déroulante de l'interface GUI IU du terminal T (ou T'),
- à stocker dans les premiers moyens de stockage MS1 cette nouvelle séquence en correspondance de son identifiant de séquence, et
- à stocker dans les seconds moyens de stockage MS2 cette nouvelle instance de contexte élémentaire en correspondance de l'identifiant de séquence associé. On notera que le second sous-module de gestion MG2 peut éventuellement vérifier que les nouvelles instances de contexte élémentaire, définies par un utilisateur, sont conformes avec le (les) contextes élémentaires de mêmes types définis par l'opérateur et/ou en accord avec le(s) modèle(s) de contextes affinés définis par l'opérateur,
- à permettre à l'utilisateur de définir un nouveau contexte élémentaire (qui fera partie d'au moins un contexte affiné). On notera que cela nécessite de modifier le modèle de contextes affinés avant d'instancier le nouveau contexte élémentaire. Le second sous-module de gestion MG2 peut alors être chargé de vérifier l'intégrité et/ou la conformité du nouveau modèle.

Il est important de noter que l'invention peut être également considérée sous l'angle d'un procédé d'obtention de contexte(s) d'utilisateur(s), pouvant être notamment mis en oeuvre au moyen d'un dispositif d'obtention de contexte(s) d'utilisateur(s) D présenté ci-avant. Les fonctionnalités offertes par la mise en oeuvre du procédé selon l'invention étant identiques à celles offertes par le dispositif D ainsi qu'éventuellement le module de profilage MP présentés ci-avant, seule la combinaison de fonctionnalités principales offerte par le procédé est présentée ci-après.

Le dispositif d'obtention de contexte(s) d'utilisateur(s) D selon l'invention, et notamment son module d'analyse MA et ses éventuels module de gestion MG et module d'identification MD, peuvent être réalisés sous la forme de circuits électroniques, de modules logiciels (ou informatiques), ou d'une combinaison de circuits et de logiciels.

Ce procédé d'obtention de contexte(s) d'utilisateur(s) consiste :
- à capter des signaux audio dans l'environnement d'un terminal T ou T', au moyen de son microphone MI,
- à comparer les signaux audio captés à des séquences de signaux audio enregistrées et associées à des contextes élémentaires prédéfinis, et
- en cas de correspondance entre les signaux audio reçus et l'une au moins des séquences, à délivrer un message élémentaire désignant chaque contexte élémentaire associé à chaque séquence correspondant aux signaux audio captés ainsi que l'utilisateur du terminal T ou T' dont le microphone MI a capté ces derniers.

Grâce à l'invention, de nombreuses applications locales ou distantes peuvent disposer d'informations précises relatives au contexte global en cours d'un utilisateur, ce qui leur permet de fonctionner de façon optimisée. Ainsi, cela permet, par exemple, de personnaliser une sonnerie, d'aiguiller un appel vers une messagerie électronique, d'effectuer une sélection de contenus ou de services puis de les transmettre ou de les proposer automatiquement, ou de transmettre des publicités (par exemple relatives à des produits relatifs à la famille lorsque l'utilisateur est en famille), en fonction du contexte en cours de l'utilisateur, ou encore de transmettre des notifications lors de changements de contexte (par exemple lorsqu'un silence est détecté on peut transmettre une information en mode texte vers parole (ou « text-to-speech »)). D'une manière générale, le contexte détecté est utilisé pour adapter l'envoi d'information (par exemple, si l'on détecte du bruit on interdit l'utilisation de la sonnerie et on force le mode vibration).

L'invention ne se limite pas aux modes de réalisation de dispositif d'obtention de contexte(s) d'utilisateur(s), de terminal de communication, de serveur de service et de procédé d'obtention de contexte(s) d'utilisateur(s) décrits ci-avant, seulement à titre d'exemple, mais elle englobe toutes les variantes que pourra envisager l'homme de l'art dans le cadre des revendications ci-après.

## Revendications

1. Dispositif (D) d'obtention de contexte(s) relatif(s) à au moins un utilisateur de terminal de communication (T ;T') équipé d'un microphone (MI) et connecté à un réseau de communication, **caractérisé en ce qu'**il comprend
- des moyens d'analyse (MA) agencés, en cas de réception de signaux audio captés par le microphone (MI) d'un terminal (T ;T') dans son environnement, i) pour comparer lesdits signaux audio reçus à des séquences de signaux audio enregistrées et associées à des contextes élémentaires prédéfinis, et ii) en cas de correspondance entre lesdits signaux audio reçus et l'une au moins desdites séquences, pour délivrer un message élémentaire désignant chaque contexte élémentaire associé à chaque séquence correspondant auxdits signaux audio reçus ainsi que l'utilisateur dudit terminal (T ;T') dont le microphone (MI) a capté ces derniers, et
- des moyens d'identification (MD) agencés, en présence d'un message élémentaire désignant au moins deux contextes élémentaires relatifs à un même utilisateur, i) pour déterminer un contexte affiné représentant ces contextes élémentaires désignés à partir d'un modèle de contextes affinés prédéfini, et ii) pour délivrer un message affiné désignant ledit contexte affiné déterminé ainsi que l'utilisateur associé.

2. Dispositif selon la revendication 1, **caractérisé en ce qu'**il comprend des premiers moyens de stockage (MS1) propres à stocker lesdites séquences de signaux audio enregistrées en correspondance d'identifiants de séquence.

3. Dispositif selon l'une des revendications 1 et 2, **caractérisé en ce qu'**il comprend des seconds moyens de stockage (MS2) propres à stocker i) des définitions des contextes élémentaires prédéfinis en correspondance d'identifiants de séquence de signaux audio enregistrée, et ii) chaque définition de contexte affiné.

4. Dispositif selon l'une des revendications 1 à 3, **caractérisé en ce que** lesdits moyens d'analyse (MA) sont agencés pour transformer des signaux audio captés en une nouvelle séquence de signaux audio enregistrée.

5. Dispositif selon l'une des revendications 1 à 4, **caractérisé en ce que** lesdits moyens d'analyse (MA) sont agencés, en cas de réception de signaux audio captés par le microphone (MI) d'un terminal (T ;T') de type radio situé dans une zone identifiée d'un réseau de communication radio, pour initier le téléchargement de séquences de signaux audio enregistrées correspondant à ladite zone identifiée, puis pour comparer lesdits signaux audio reçus au moins auxdites séquences téléchargées.

6. Dispositif selon l'une des revendications 3 à 5, **caractérisé en ce qu'**il comprend des moyens de gestion (MG) agencés pour i) stocker dans lesdits premiers moyens de stockage (MS1) une nouvelle séquence de signaux audio enregistrée, transmise par l'opérateur dudit réseau, en correspondance d'un nouvel identifiant de séquence, puis stocker dans lesdits seconds moyens de stockage (MS2) une nouvelle définition de contexte élémentaire en correspondance du nouvel identifiant de séquence, et/ou ii) associer un identifiant de séquence à une nouvelle séquence résultant de signaux audio captés, puis associer une nouvelle instance de contexte élémentaire à cet identifiant de séquence, puis stocker dans lesdits premiers moyens de stockage (MS1) cette nouvelle séquence en correspondance de son identifiant de séquence, et stocker dans lesdits seconds moyens de stockage (MS2) ladite nouvelle instance de contexte élémentaire en correspondance de l'identifiant de séquence associé.

7. Dispositif selon l'une des revendications 1 à 6, **caractérisé en ce que** lesdits contextes élémentaires sont choisis dans un groupe comprenant au moins les contextes environnementaux et les contextes de situation.

8. Dispositif selon la revendication 7, **caractérisé en ce que** lesdits contextes environnementaux sont choisis dans un groupe comprenant au moins les contextes sociaux/relationnels et les contextes sonores.

9. Dispositif selon l'une des revendications 7 et 8, **caractérisé en ce que** lesdits contextes de situation sont choisis dans un groupe comprenant au moins les contextes de localisation, les contextes d'état émotionnel et les contextes d'activité.

10. Terminal de communication (T), **caractérisé en ce qu'**il comprend un dispositif d'obtention de contexte(s) selon l'une des revendications précédentes.

11. Serveur de service (S') pour un réseau de communication (RC), **caractérisé en ce qu'**il comprend un dispositif d'obtention de contexte(s) selon l'une des revendications 1 à 9, propre à recevoir, de terminaux de communication (T') connectés audit réseau (RC), des signaux audio captés dans leur environnement par un microphone (MI) qu'ils comprennent.

12. Serveur selon la revendication 11, **caractérisé en ce qu'**il comprend des moyens de profilage (MP) agencés pour définir des profils d'utilisateurs en fonction de contextes élémentaires et/ou de contextes affinés relatifs auxdits utilisateurs et délivrés par ledit dispositif (D).

13. Procédé d'obtention de contexte(s) relatif(s) à au moins un utilisateur de terminal de communication (T ;T') équipé d'un microphone (MI) et connecté à un réseau de communication, **caractérisé en ce qu'**il consiste i) à capter dans l'environnement d'un terminal (T ;T'), au moyen d'un microphone (MI), des signaux audio, ii) à comparer lesdits signaux audio captés à des séquences de signaux audio enregistrées et associées à des contextes élémentaires prédéfinis, iii) en cas de correspondance entre lesdits signaux audio reçus et l'une au moins desdites séquences, à délivrer un message élémentaire désignant chaque contexte élémentaire associé à chaque séquence correspondant auxdits signaux audio captés ainsi que l'utilisateur dudit terminal (T ;T') dont le microphone (MI) a capté ces derniers, et iv) en présence d'un message élémentaire désignant au moins deux contextes élémentaires relatifs à un même utilisateur, à déterminer un contexte affiné représentant ces contextes élémentaires désignés à partir d'un modèle de contextes affinés prédéfini, et à délivrer un message affiné désignant ledit contexte affiné déterminé ainsi que l'utilisateur associé.

14. Procédé selon la revendication 13, **caractérisé en ce que** l'on transforme des signaux audio captés choisis en une nouvelle séquence de signaux audio enregistrée.

15. Procédé selon la revendication 14, **caractérisé en ce que** l'on associe un nouvel identifiant de séquence à chaque nouvelle séquence résultant de signaux audio captés, puis on associe une nouvelle instance de contexte élémentaire à ce nouvel identifiant de séquence, puis on stocke cette nouvelle séquence en correspondance de son identifiant de séquence, et on stocke ladite nouvelle instance de contexte élémentaire en correspondance de l'identifiant de séquence associé.

16. Procédé selon l'une des revendications 13 à 15, **caractérisé en ce qu'**en cas de réception de signaux audio captés par le microphone (MI) d'un terminal (T;T') de type radio situé dans une zone identifiée d'un réseau de communication radio, on télécharge des séquences de signaux audio enregistrées correspondant à ladite zone identifiée, puis on compare lesdits signaux audio reçus au moins auxdites séquences téléchargées.

17. Procédé selon l'une des revendications 13 à 17, **caractérisé en ce que** lesdits contextes élémentaires sont choisis dans un groupe comprenant au moins les contextes environnementaux et les contextes de situation.

18. Procédé selon la revendication 17, **caractérisé en ce que** lesdits contextes environnementaux sont choisis dans un groupe comprenant au moins les contextes sociaux/relationnels et les contextes sonores.

19. Procédé selon l'une des revendications 17 et 18, **caractérisé en ce que** lesdits contextes de situation sont choisis dans un groupe comprenant au moins les contextes de localisation, les contextes d'état émotionnel et les contextes d'activité.

20. Procédé selon l'une des revendications 13 à 19, **caractérisé en ce que** l'on définit des profils d'utilisateurs en fonction de contextes élémentaires et/ou de contextes affinés relatifs auxdits utilisateurs.

## Claims

1. A device (D) for obtaining context(s) regarding at least one user of a communication terminal (T; T') equipped with a microphone (MI) and connected to a communication network, **characterized in that** it comprises - analysis means (MA) configured, whenever audio signals captured by the microphone (MI) of a terminal (T; T') are received within its environment, i) to compare said received audio signals with sequences of audio signals which are saved and associated with predefined elementary contexts, and ii) if there is a match between said received audio signals and at least one of said sequences, to deliver an elementary message designating each elementary context associated with each sequence matching said received audio signals as well as the user of said terminal (T; T') whose microphone (MI) captured these signals, and
- identification means (MD) configured, in the presence of an elementary message designating at least two elementary contexts regarding a single user, i) to determine a refined context representing these designated elementary contexts based on a predefined refined context model, and ii) to deliver a refined message designating said determined refined context as well as the associated user.

2. A device according to claim 1, **characterized in that** it comprises first storage means (MS1) capable of storing said saved sequences of audio signals matching sequence identifiers.

3. A device according to one of the claims 1 and 2, **characterized in that** it comprises second storage means (MS2) capable of storing i) definitions of predefined elementary contexts matching sequence identifiers of saved audio signals, and ii) each refined context definition.

4. A device according to one of the claims 1 to 3, **characterized in that** said analysis means (MA) are configured to transform captured audio signals into a new saved sequence of audio signals.

5. A device according to one of the claims 1 to 4, **characterized in that** said analysis means (MA) are configured, in the event that audio signals captured by the microphone (MI) of a radio terminal (T; t') located within an identified zone of a radio communication network are received, to initiate the downloading of saved sequences of audio signals matching said identified zone, then to compare said received audio signals with at least said downloaded sequences.

6. A device according to one of the claims 3 to 5, **characterized in that** it comprises management means (MG) configured to i) store within said first storage means (MS1) a new saved sequence of audio signals, transmitted by the operator of said network, matching a new sequence identifier, then storing within said second storage means (MS2) a new elementary context definition matching the new sequence identifier, and/or ii) associating a sequence identifier with a new sequence resulting from captured audio signals, then associating a new elementary context instance with that sequence identifier, then storing within said first storage means (MS1) that new sequence matching its sequence identifier, and storing within said second storage means (MS2) said new elementary context instance matching the associated sequence identifier.

7. A device according to one of the claims 1 to 6, **characterized in that** said elementary contexts are chosen from a group comprising at least the elementary contexts and situation contexts.

8. A device according to claim 7, **characterized in that** said environmental contexts are chosen from a group comprising at least the social/relational contexts and the sound-related contexts.

9. A device according to one of the claims 7 and 8, **characterized in that** said situation contexts are chosen from a group comprising at least location contexts, emotional state contexts, and activity contexts.

10. A communication terminal (T), **characterized in that** it comprises a device for obtaining context(s) according to one of the previous claims.

11. A service server (S') for a communication network (RC), **characterized in that** it comprises a device for obtaining context(s) according to one of the claims 1 to 9, capable of receiving, from communication terminals (T') connected to said network (RC), audio signals captured in their environment by a microphone (MI) which they comprise.

12. A server according to claim 11, **characterized in that** it comprises profiling means (MP) configured to define user profiles based on elementary contexts and/or refined contexts regarding said users and delivered by said device (D).

13. A method for obtaining context(s) regarding at least one user of a communication terminal (T; T') equipped with a microphone (MI) and connected to a communication network, **characterized in that** it consists of i) capturing within the environment of a terminal (T; T'), by means of a microphone (MI), audio signals, ii) comparing said captured audio signals with audio signal sequences which are saved and associated with predefined elementary contexts, iii) in the event of a match between said received audio contexts and at least one of said sequences, to deliver an elementary message designating each elementary context associated with each sequence corresponding to said captured audio signals as well as the user of said terminal (T; T') whose microphone (MI) captured these signals, and iv) in the presence of an elementary message designating at least two elementary contexts regarding a single user, determining a refined context representing these designated elementary contexts based on a predefined template of refined contexts, and delivering a refined message designating said determined refined context as well as the associated user.

14. A method according to claim 13, **characterized in that** captured audio signals are transformed into a new saved sequence of audio signals.

15. A method according to claim 14, **characterized in that** a new sequence identifier is associated with each new sequence resulting from captured audio signals, then a new elementary context instance is associated with that new sequence identifier, then that new sequence is saved matching its sequence identifier, and said new elementary context instance is saved matching the associated sequence identifier.

16. A method according to one of the claims 13 to 15, **characterized in that** if audio signals captured by the microphone (MI) of a radio terminal (T; T') located within an identified zone of a radio communication network are received, saved sequences of audio signals corresponding to said identified zone are downloaded, and then said received audio signals are compared at least to said downloaded sequences.

17. A method according to one of the claims 13 to 16, **characterized in that** said elementary contexts are chosen from a group comprising at least the elementary contexts and situation contexts.

18. A method according to claim 17, **characterized in that** said environmental contexts are chosen from a group comprising at least the social/relational contexts and the sound-related contexts.

19. A method according to one of the claims 17 and 18, **characterized in that** said situation contexts are chosen from a group comprising at least location contexts, emotional state contexts, and activity contexts.

20. A method according to one of the claims 13 to 19, **characterized in that** user profiles are defined based on elementary contexts and/or refined context regarding said users.

## Patentansprüche

1. Vorrichtung (D) zur Erhaltung eines Kontextes/von Kontexten in Bezug auf mindestens einen Benutzer eines mit einem Mikrofon (MI) ausgestatteten und an ein Kommunikationsnetzwerk angeschlossenen Kommunikationsendgerätes (T; T'), **dadurch gekennzeichnet, dass** sie umfasst:
- Analysemittel (MA), welche dazu ausgelegt sind, bei Empfang von durch das Mikrofon (MI) eines Endgerätes (T; T') in seiner Umgebung abgegriffenen Audiosignalen i) die besagten empfangenen Audiosignale mit eingelesenen und vorgegebenen Elementarkontexten zugeordneten Audiosignalsequenzen zu vergleichen, und ii) bei Übereinstimmung zwischen den besagten empfangenen Audiosignalen und zumindest einer der besagten Sequenzen eine Elementarnachricht, welche jeden Elementarkontext, der jeder den besagten empfangenen Audiosignalen entsprechenden Sequenz zugeordnet ist, sowie den Benutzer des besagten Endgerätes (T; T'), dessen Mikrofon (MI) die besagten Audiosignale abgegriffen hat, bezeichnet, auszugeben, und
- Identifikationsmittel (MD), welche dazu ausgelegt sind, im Fall einer Elementarnachricht, welche mindestens zwei einen selben Benutzer betreffende Elementarkontexte bezeichnet, i) einen verfeinerten Kontext, welcher diese bezeichneten Elementarkontexte darstellt, ausgehend von einem vorgegebenen verfeinerten Kontextmodell zu bestimmen, und ii) eine verfeinerte Nachricht, welche den besagten bestimmten verfeinerten Kontext sowie den zugehörigen Benutzer bezeichnet, auszugeben.

2. Vorrichtung nach Anspruch 1, dass sie erste Speichermittel (MS1) zum Speichern der besagten eingelesenen Audiosignalsequenzen entsprechend den Sequenzkennungen umfasst.

3. Vorrichtung nach einem der Ansprüche 1 und 2, **dadurch gekennzeichnet, dass** sie zweite Speichermittel (MS2) zum Speichern i) der vorgegebenen Elementarkontextdefinitionen entsprechend den Kennungen von eingelesenen Audiosignalsequenzen, und ii) jeder verfeinerten Kontextdefinition umfasst.

4. Vorrichtung nach einem der Ansprüche 1 bis 3, **dadurch gekennzeichnet, dass** die besagten Analysemittel (MA) dazu ausgelegt sind, abgegriffene Audiosignale in eine neue eingelesene Audiosignalsequenz umzuwandeln.

5. Vorrichtung nach einem der Ansprüche 1 bis 4, **dadurch gekennzeichnet, dass** die besagten Analysemittel (MA) dazu ausgelegt sind, bei Empfang von durch das Mikrofon (MI) eines Endgeräts (T; T') vom Typ Radio, welches sich in einer identifizierten Zone eines Funkkommunikationsnetzwerks befindet, abgegriffenen Audiosignalen das Herunterladen von eingelesenen Audiosignalsequenzen, welche der besagten identifizierten Zone entsprechen, zu initiieren und die besagten empfangenen Audiosignale anschließend mit zumindest den besagten heruntergeladenen Sequenzen zu vergleichen.

6. Vorrichtung nach einem der Ansprüche 3 bis 5, **dadurch gekennzeichnet, dass** sie Verwaltungsmittel (MG) umfasst, welche dazu ausgelegt sind, i) eine neue eingelesene Audiosignalsequenz, welche vom Betreiber des besagten Netzwerks übertragen wurde, entsprechend einer neuen Sequenzkennung in den besagten ersten Speichermitteln (MS1) zu speichern und anschließend eine neue Elementarkontextdefinition entsprechend der neuen Sequenzkennung in den besagten zweiten Speichermitteln (MS2) zu speichern, und/oder ii) einer neuen Sequenz, welche aus den abgegriffenen Audiosignalen resultiert, eine Sequenzkennung zuzuordnen und dieser Sequenzkennung anschließend eine neue Elementarkontextinstanz zuzuordnen, und diese neue Sequenz anschließend entsprechend ihrer Sequenzkennung in den besagten ersten Speichermitteln (MS1) zu speichern, und die besagte neue Elementarkontextinstanz entsprechend der zugehörigen Sequenzkennung in den besagten zweiten Speichermitteln (MS2) zu speichern.

7. Vorrichtung nach einem der Ansprüche 1 bis 6, **dadurch gekennzeichnet, dass** die besagten Elementarkontexte in einer Gruppe bestehend aus mindestens den Umgebungskontexten und den Situationskontexten gewählt werden.

8. Vorrichtung nach Anspruch 7, **dadurch gekennzeichnet, dass** die besagten Umgebungskontexte in einer Gruppe bestehend aus mindestens den sozialen/relationalen Kontexten und den Geräuschkontexten gewählt werden.

9. Vorrichtung nach einem der Ansprüche 7 und 8, **dadurch gekennzeichnet, dass** die besagten Situationskontexte in einer Gruppe bestehend aus mindestens den Lokalisierungskontexten, den Kontexten des emotionalen Zustands und den Tätigkeitskontexten gewählt werden.

10. Kommunikationsendgerät (T), **dadurch gekennzeichnet, dass** es eine Vorrichtung zur Erhaltung eines Kontextes/von Kontexten gemäß einem der vorstehenden Ansprüche umfasst.

11. Dienstserver (S') für ein Kommunikationsnetzwerk (RC), **dadurch gekennzeichnet, dass** er eine Vorrichtung zur Erhaltung eines Kontextes/von Kontexten gemäß einem der Ansprüche 1 bis 9 umfasst, für den Empfang, von an das besagte Netzwerk (RC) angeschlossenen Kommunikationsendgeräten (T'), der in ihrer Umgebung durch ein Mikrofon (MI), mit welchem sie ausgestattet sind, abgegriffenen Audiosignale.

12. Server nach Anspruch 11, **dadurch gekennzeichnet, dass** er Profilierungsmittel (MP) umfasst, welche dazu ausgelegt sind, Benutzerprofile gemäß Elementarkontexten und/oder verfeinerten Kontexten in Bezug auf die besagten Benutzer, welche von der besagten Vorrichtung (D) ausgegeben werden, zu definieren.

13. Verfahren (D) zur Erhaltung eines Kontextes/von Kontexten in Bezug auf mindestens einen Benutzer eines mit einem Mikrofon (MI) ausgestatteten und an ein Kommunikationsnetzwerk angeschlossenen Kommunikationsendgerätes (T; T'), **dadurch gekennzeichnet, dass** es darin besteht: i) Anhand eines Mikrofons (MI) Audiosignale in der Umgebung eines Endgerätes (T; T') abzugreifen, ii) die besagten abgegriffenen Audiosignale mit eingelesenen und vorgegebenen Elementarkontexten zugeordneten Audiosignalsequenzen zu vergleichen, iii) bei Übereinstimmung zwischen den besagten empfangenen Audiosignalen und mindestens einer der besagten Sequenzen eine Elementarnachricht, welche jeden Elementarkontext, der jeder den besagten abgegriffenen Audiosignalen entsprechenden Sequenz zugeordnet ist, sowie den Benutzer des besagten Endgerätes (T; T'), dessen Mikrofon (MI) die besagten Audiosignale abgegriffen hat, bezeichnet, auszugeben, und iv) wenn eine Elementarnachricht mindestens zwei Elementarkontexte in Bezug auf einen selben Benutzer bezeichnet, einen verfeinerten Kontext zu bestimmen, welcher diese bezeichneten Elementarkontexte darstellt, ausgehend von einem vorgegebenen verfeinerten Kontextmodell zu bestimmen und eine verfeinerte Nachricht, welche den besagten bestimmten verfeinerten Kontext sowie den zugehörigen Benutzer bezeichnet, auszugeben.

14. Verfahren nach Anspruch 13, **dadurch gekennzeichnet, dass** man ausgewählte abgegriffene Audiosignale in eine neue eingelesene Audiosignalsequenz umwandelt.

15. Verfahren nach Anspruch 14, **dadurch gekennzeichnet, dass** man jeder neuen Sequenz, welche aus abgegriffenen Audiosignalen resultiert, eine neue Sequenzkennung zuordnet, und dass man dieser neuen Sequenzkennung anschließend eine neue Elementarkontextinstanz zuordnet und diese neue Sequenz anschließend entsprechend ihrer Sequenzkennung speichert, und dass man die besagte neue Elementarkontextinstanz entsprechend der zugehörigen Sequenzkennung speichert.

16. Verfahren nach einem der Ansprüche 13 bis 15, **dadurch gekennzeichnet, dass** man, wenn durch das Mikrofon (MI) eines Endgerätes (T; T') vom Typ Radio, welches sich in einer identifizierten Zone eines Funkkommunikationsnetzwerks befindet, abgegriffene Audiosignale empfangen werden, eingelesene Audiosignalsequenzen, welche der besagten identifizierten Zone entsprechen, herunterladet und die besagten empfangenen Audiosignale anschließend mindestens mit den besagten heruntergeladenen Sequenzen vergleicht.

17. Verfahren nach einem der Ansprüche 13 bis 16, **dadurch gekennzeichnet, dass** die besagten Elementarkontexte in einer Gruppe bestehend aus mindestens den Umgebungskontexten und den Situationskontexten gewählt werden.

18. Verfahren nach Anspruch 17, **dadurch gekennzeichnet, dass** die besagten Umgebungskontexte in einer Gruppe bestehend aus mindestens den sozialen/relationalen Kontexte und den Geräuschkontexten gewählt werden.

19. Verfahren nach einem der Ansprüche 17 und 18, **dadurch gekennzeichnet, dass** die besagten Situationskontexte in einer Gruppe bestehend aus mindestens den Lokalisierungskontexten, den Kontexten des emotionalen Zustands und den Tätigkeitskontexten gewählt werden.

20. Verfahren nach einem der Ansprüche 13 bis 19, **dadurch gekennzeichnet, dass** man Benutzerprofile entsprechend Elementarkontexten und/oder verfeinerten Kontexten in Bezug auf die besagten Benutzer definiert.
